(19) Europäisches Patentamt
European Patent Office
Office européen des brevets

(11) **EP 4 530 885 A1**

(12) **EUROPEAN PATENT APPLICATION**

(43) Date of publication:
**02.04.2025 Bulletin 2025/14**

(21) Application number: **23199960.8**

(22) Date of filing: **27.09.2023**

(51) International Patent Classification (IPC):
**G06F 16/55** (2019.01)   **G06F 16/75** (2019.01)
**G06N 3/045** (2023.01)

(52) Cooperative Patent Classification (CPC):
**G06F 16/55; G06F 16/75; G06N 3/045; G06N 3/08;**
G06F 16/35

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventor: **Metzen, Jan Hendrik
71034 Boeblingen (DE)**

Remarks:
Amended claims in accordance with Rule 137(2)
EPC.

(54) **DEVICE AND METHOD TO IMPROVE ZERO-SHOT CLASSIFICATION**

(57)    A computer-implemented method of classifying a sensor signal (30) by a sensor signal encoder and a text encoder, wherein said encoders are configured to encoder their inputs into a latent representation, comprising the steps of: Encoding the sensor signal (30) to a first latent representation ($e^{(x)}$) by the sensor signal encoder. Generating a plurality of text prompts ($t_{ij}$), wherein for each class ($c_j$) several text prompts characterizing the corresponding class are instantiated ($t_i \leftarrow c_j$). Encoding the generated text prompts ($t_{ij}$) into second latent representations ($e_{ij}^t$) by the text encoder. Determining a class query ($q_j$) for each class by weighted averaging over the second representations ($e_{ij}^t$) corresponding to the same class ($c_i$). Computing a similarity between the first latent representation ($e^{(x)}$) and each of the class queries ($q_j$). Assigning the sensor signal (30) to the class with the highest similarity.

Fig. 1

EP 4 530 885 A1

**Description**

The invention concerns a method for improving zero-shot classification by a combination of image and text encoders, wherein weightings of prompts for the text encoder are optimized, and a method for operating an actuator, a computer program and a machine-readable storage medium, and a system.

Prior art

Zero-shot classifiers built upon models like CLIP (https://arxiv.org/abs/2103.00020) or CoCa (https://arxiv.org/abs/2205.01917) have shown strong domain generalization due a diverse training data distribution of CLIP and CoCa. They are constructed based on a set of prompt templates (parametrized by the class name) that cover potential variation of the domain.
These prompt templates can be hand-designed (https://arxiv.org/abs/2103.00020), generated by a large language model (https://arxiv.org/abs/2210.07183) or randomly generated (https://arxiv.org/abs/2306.07282). By instantiating the templates via inserting the class name, a set of text queries per class is obtained. These are encoded by the CLIP text encoder and the resulting encoded queries (per class) are simply averaged. For a datum to be classified (typically an image but potentially also other modalities in approaches like e.g. ImageBind https://arxiv.org/abs/2305.05665), this datum is first encoded by the encoder of the respective modality (e.g. image encoder) and then the cosine similarity of the encoded datum with every (averaged) class query is computed. The datum is then assigned to the class with the maximum similarity.

Advantages of the invention

The improvement over the prior art is given by at least that the inventors propose not to simply average the encoded text prompts (per class), but take a weighted average, where weights are automatically determined for every datum separately. Weights are determined such that prompt templates whose embeddings (across classes) are closer to the embedding of the respective datum get a higher weight than those being less similar. This can intuitively be motivated by closer text encodings corresponding to text prompts that describe the datum better than ones with lower similarity.
Thereby, the invention improves performance of zero-shot classifiers on many types of data with very little inference time overhead, and still being fully zero-shot because it works without requiring any labels or other datapoints from the target domain. It makes no assumptions on the underlying multi-model model and can thus be broadly applied.

Disclosure of the invention

In a first aspect, a method of classifying a sensor signal by a sensor signal encoder and a text encoder according to claim 1 is proposed.
The encoders are configured to encode their inputs to a latent representation. A latent representation can be understood as a point in a latent space. A latent space, also known as a latent feature space or embedding space, is an embedding within a manifold in which items resembling each other are positioned closer to one another in the latent space. Both sensor signal encoder and text encoder can share the same latent space.
The method of classifying starts with generating a plurality of text prompts, wherein for each class several text prompts characterizing the corresponding class are instantiated. This step can be carried out by manually writing the prompts and/or by automatically generating them, e.g. as described above in the prior art section. A text prompt can be a text for processing by a foundation model.
This is followed by encoding of the generated text prompts into second latent representations by the text encoder.
This is followed by determining a class query for each class by averaging over the second representations corresponding to the same class. This step differs compared to the prior art by carrying out the averaging as a weighted average, wherein each second representations corresponding to the same class is weighted by a weight.
This is followed by computing a (cosine) similarity between the first latent representation and each of the class queries and assigning the sensor signal to the class with the highest similarity.

Preferably, the first latent representation ($e^{(x)}$) and second latent representations ($e_{ij}^{t}$) are normalized.
Preferably, the instantiation of the prompts is generated by inserting class names into predefined templates of text prompts. In addition, class properties can be inserted into the templates. It is noted that other known methods for filling out text prompt templates from the literature can be utilized.
The sensor signals can be images. The term image basically includes any distribution of information arranged in a two- or multi-dimensional grid. This information can be, for example, intensity values of image pixels captured with any imaging modality, such as an optical camera, thermal imaging camera or ultrasound. However, any other data, such as audio data, radar data or LIDAR data, can also be translated into images and then classified in the same way or can be provided as an additional input for the encoders.

It is noted that the classification can be carried out based on low-level features (e.g. edges or pixel attributes for images), in particular the determination of the latent representations.

Preferably, the encoders are foundation models, in particular the encoders of CLIP or CoCa.

The assigned class, aka the classification, can then be used for providing an actuator control signal for controlling an actuator.

In a further aspect of the invention, a control system/method for operating the actuator is proposed. Said control system/method being configured to operate said actuator in accordance with the actuator control signal.

Embodiments of the invention will be discussed with reference to the following figures in more detail. The figures show:

Figure 1    a schematic flow diagram of an embodiment of the invention;

Figure 2    a control system controlling an at least partially autonomous robot;

Figure 3    a control system controlling a manufacturing machine;

Figure 4    a control system controlling an access control system;

Figure 5    a control system controlling a surveillance system;

Figure 6    a control system controlling an automated personal assistant;

Figure 7    a control system controlling an imaging system;

Figure 8    a training system for controlling the classifier.

Description of the embodiments

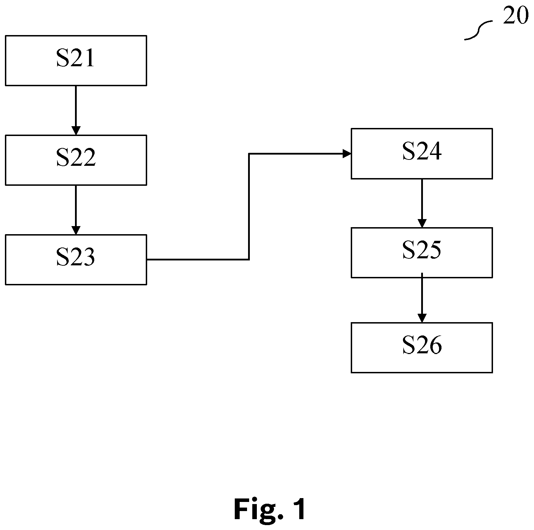

Figure 1 shows in a first embodiment a known method 20 for zero-shot classification.

Let's consider a classification task $X \rightarrow (c_1, \dots, c_C)$, where $X$ corresponds to the input domain such as images of a specific resolution or radar point clouds and there are $C$ classes. We assume that there exists a multi-modal joint embedding space $E$ and corresponding embedding functions $E_X: X \rightarrow \varepsilon$ that maps input data $x \in X$ into embedding space $E$ and $E_T: T \rightarrow \varepsilon$ that maps text prompts into embedding space $\varepsilon$. Let there be $K$ text prompt templates $\hat{t}_1, \dots \hat{t}_K$ (e.g. manually designed, generated by a large language model, or randomly augmented) that are all parametrized by the class name $c$. A zero-shot classifier is then obtained via the following steps:

S21: Encode datum of interest $x$ into $e^{(x)} = \dfrac{E_X(x)}{\left\|E_X(x)\right\|_2}$.

S22: Generate $K \cdot C$ text prompts $t_{ij} = (\hat{t}_i \leftarrow c_j)$, where $(\hat{t}_i \leftarrow c_j)$ refers to instantiating template $\hat{t}_i$ by inserting class name $c_j$.

S23: Encode all text prompts $e^t = \dfrac{E_T(t_{ij})}{\left\|E_T(t_{ij})\right\|_2}$.

S24: Average over templates all text encodings corresponding to a class to obtain class query $q_j = \frac{1}{K}\sum_{i=1}^{K} e_{ij}^{(t)}$.

S25: Compute cosine similarity between $x$ and all class queries $q_j$: $s_j = e^{(x)} \cdot q_j$.

S26: Assign $x$ to class $c_j$ with $j^* = arg\max_j s_j$.

In a second embodiment of Figure 1, an improvement of the zero-shot classification is shown. For said improvement, step S24 utilizes instead of an unweighted average of text encodings $q_j = \frac{1}{K}\sum_{i=1}^{K} e_{ij}^{(t)}$ a weighted average: $q_j = \frac{1}{K}\sum_{i=1}^{K} w_i e_{ij}^{(t)}$ with preferably $\sum_{i=1}^{K} w_i = 1$, which can be achieved by setting w = *softmax*($\rho$) and

preferably $\rho \in \mathbb{R}^K$.

In general, $\rho$ can be initialized by zero, which corresponds to an unweighted mean of text encodings. Then, gradients $\nabla_\rho logsumexp(s)$ are computed, where $s = q \times e^x$, $logsumexp(s) = log \sum_{j=0}^{K} \exp(s_j)$ and the operator $\times$ refers to the (batched) inner product.

For a learning rate $\alpha$, one can run for R steps (typically $\alpha$ = 0:8 and R = 1): $\rho_r = \rho_{r-1} + \alpha K \nabla_\rho logsumexp(s)$.

Thus, after $R$ steps of gradient ascent for $\rho$ to maximize $logsumexp(s)$. The motivation for maximizing $logsumexp(s)$ is that this corresponds to assigning higher weights to prompt templates that have encodings that are more similar to the encoded datum since similarity in embedding space corresponds to a text prompt better describing the datum.

This modification of the known zero-shot classifier can be referred to as "auto-tuned" because its weights w are automatically adapted for every input.

In a preferred embodiment of the "auto-tuned" classifier, the $\nabla_\rho logsumexp(s)$ can be computed in closed-form with the inner product $e^{(xt)} = e^{(x)} \times e^{(t)}$:

$$\nabla_\rho logsumexp(s)_i = \sum_{k=1}^{K}(\sum_{j=1}^{C} softmax(s)_j \, e_{ij}^{(xt)}) w_i(\delta_{ik} - w_k)$$

with $\delta_{ij}$ being the Kronecker delta function with $\delta_{ii}$ = 1 and $\delta_{ij}$ = 0 for $i \neq j$.

By inserting the auto-tuned averaging of text encoding, now the second embodiment of Figure 1 the step S25 comprises determining the weights $w_i$ as described above and then determining the weighted average by $q_j = \frac{1}{K}\sum_{i=1}^{K} w_i e_{ij}^{(t)}$ with $w_i = softmax(\rho)$.

In detail of step S25, at the beginning the auto-tuned averaging sets $\rho = 0$ and then runs a loop for R steps with the following substeps to determine the weights $w_i$:

    a. Set $w\_i = softmax(\rho)$;
    b. Weighted average over templates of all text encodings corresponding to a class to obtain class query $q_j = \frac{1}{K}\sum_{i=1}^{K} w_i e_{ij}^{(t)}$;
    c. Compute cosine similarity between $x$ and all class queries $q_j$: $s_j = e^{(x)} \cdot q_j$
    d. Compute gradient $\nabla_\rho logsumexp(s)$;
    e. Update $\rho$ with gradient ascent and learning rate: $\rho_r = \rho_{r-1} + \alpha K \nabla_\rho logsumexp(s)$.

In a preferred embodiment, a heuristic for choosing the learning rate automatically can be used. It is noted that in a zero-shot setting, there is by definition no labeled data on which free parameters like the learning rate can be tuned. Because of this, free parameters is perferably selected globally in a dataset-independent manner. However, a global choice for the learning rate $\alpha$ can be problematic since the scale of the gradient $\nabla_\rho logsumexp(s)$ depends on the dataset and the learning rate would have to be adapted accordingly. Because of this, it is proposed to use a different parameterization in which the free parameter is easier interpreted and $\alpha$ is a derived quantity. Specifically, one can control the entropy of the query weights w, $entropy(w) = -\sum_{i=1}^{K} w_i \, log_2 w_i$. The standard, untuned uniform weights have maximum entropy $log_2 K$ and one can set the target entropy to $\beta * log_2 K$, where the entropy reduction factor $\beta$ is the new free parameter. A preferred value is $\beta$=0.85. One can then use a method for finding the root of $entropy(w) - \beta * log_2 K = 0$ (with $w = softmax(\alpha * \nabla_\rho logsumexp(s))$ for $\alpha \in [0, 10^{10}]$. A preferred root finding method is the bisection method (https://en.wikipedia.org/wiki/Bisection method). The root $\alpha$ is the determined learning rate.

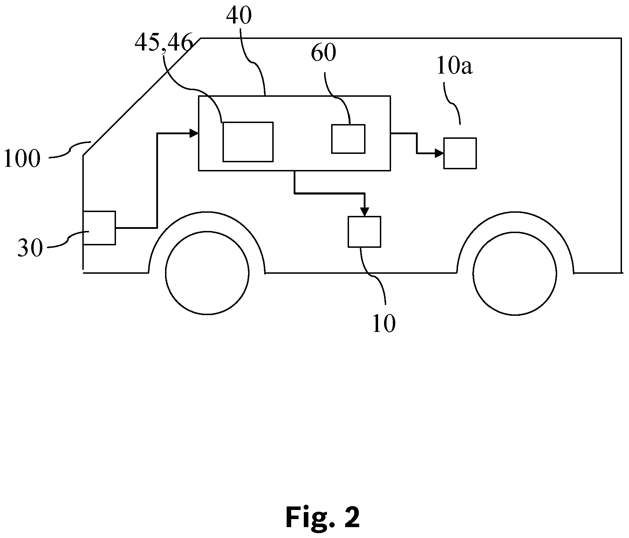

Shown in figure 2 is one embodiment of an actuator with a control system 40. Actuator and its environment will be jointly called actuator system. At preferably evenly spaced distances, a sensor 30 senses a condition of the actuator system. The sensor 30 may comprise several sensors. Preferably, sensor 30 is an optical sensor that takes images of the environment. An output signal S of sensor 30 (or, in case the sensor 30 comprises a plurality of sensors, an output signal S for each of the sensors) which encodes the sensed condition is transmitted to the control system 40.

Thereby, control system 40 receives a stream of sensor signals S. It then computes a series of actuator control commands A depending on the stream of sensor signals S, which are then transmitted to actuator unit 10 that converts the control commands A into mechanical movements or changes in physical quantities. For example, the actuator unit 10 may convert the control command A into an electric, hydraulic, pneumatic, thermal, magnetic and/or mechanical movement or change. Specific yet non-limiting examples include electrical motors, electroactive polymers, hydraulic cylinders, piezoelectric actuators, pneumatic actuators, servomechanisms, solenoids, stepper motors, etc.

Control system 40 receives the stream of sensor signals S of sensor 30 in an optional receiving unit 50. Receiving unit 50 transforms the sensor signals S into input signals x. Alternatively, in case of no receiving unit 50, each sensor signal S may directly be taken as an input signal x. Input signal x may, for example, be given as an excerpt from sensor signal S. Alternatively, sensor signal S may be processed to yield input signal x. Input signal x comprises image data corresponding to an image recorded by sensor 30. In other words, input signal x is provided in accordance with sensor signal S.

Input signal x is then passed on to the zero-shot classification method e.g. according to the second embodiment of Fig. 1, that is referred to as classifier 60 in the following, which may, for example, be given by an artificial neural network.

Classifier 60 is parametrized by parameters $\phi$, which are stored in and provided by parameter storage $St_1$.

Classifier 60 determines output signals y from input signals x. The output signal y comprises information that assigns one or more labels to the input signal x. Output signals y are transmitted to an optional conversion unit 80, which converts the output signals y into the control commands A. Actuator control commands A are then transmitted to actuator unit 10 for controlling actuator unit 10 accordingly. Alternatively, output signals y may directly be taken as control commands A.

Actuator unit 10 receives actuator control commands A, is controlled accordingly and carries out an action corresponding to actuator control commands A. Actuator unit 10 may comprise a control logic which transforms actuator control command A into a further control command, which is then used to control actuator 10.

In further embodiments, control system 40 may comprise sensor 30. In even further embodiments, control system 40 alternatively or additionally may comprise actuator 10.

In one embodiment classifier 60 may be designed to identify lanes on a road ahead, e.g. by classifying a road surface and markings on said road and identifying lanes as patches of road surface between said markings. Based on an output of a navigation system, a suitable lane for pursuing a chosen path can then be selected and depending on a present lane and said target lane, it may then be decided whether vehicle 60 is to switch lanes or stay in said present lane. Control command A may then be computed by e.g. retrieving a predefined motion pattern from a database corresponding to said identified action.

Likewise, upon identifying road signs or traffic lights, depending on an identified type of road sign or an identified state of said traffic lights, corresponding constraints on possible motion patterns of vehicle 60 may then be retrieved from e.g. a database, a future path of vehicle 60 commensurate with said constraints may be computed, and said actuator control command A may be computed to steer the vehicle such as to execute said trajectory.

Likewise, upon identifying pedestrians and/or vehicles, a projected future behavior of said pedestrians and/or vehicles may be estimated, and based on said estimated future behavior, a trajectory may then be selected such as to avoid collision with said pedestrian and/or said vehicle, and said actuator control command A may be computed to steer the vehicle such as to execute said trajectory.

Furthermore, control system 40 may comprise a processor 45 (or a plurality of processors) and at least one machine-readable storage medium 46 on which instructions are stored which, if carried out, cause control system 40 to carry out a method according to one aspect of the invention.

In a preferred embodiment of Figure 2, the control system 40 is used to control the actuator, which is an at least partially autonomous robot, e.g. an at least partially autonomous vehicle 100.

Sensor 30 may comprise one or more video sensors and/or one or more radar sensors and/or one or more ultrasonic sensors and/or one or more LiDAR sensors and or one or more position sensors (like e.g. GPS). Some or all of these sensors are preferably but not necessarily integrated in vehicle 100. Alternatively or additionally sensor 30 may comprise an information system for determining a state of the actuator system. One example for such an information system is a weather information system which determines a present or future state of the weather in environment 20.

For example, using input signal x, the classifier 60 may for example detect objects in the vicinity of the at least partially autonomous robot. Output signal y may comprise an information which characterizes where objects are located in the vicinity of the at least partially autonomous robot. Control command A may then be determined in accordance with this information, for example to avoid collisions with said detected objects.

Actuator unit 10, which is preferably integrated in vehicle 100, may be given by a brake, a propulsion system, an engine, a drivetrain, or a steering of vehicle 100. Actuator control commands A may be determined such that actuator (or actuators) unit 10 is/are controlled such that vehicle 100 avoids collisions with said detected objects. Detected objects may also be classified according to what the classifier 60 deems them most likely to be, e.g. pedestrians or trees, and actuator control commands A may be determined depending on the classification.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, actuator command control A may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses sensor 30, preferably an optical sensor, to determine a state of plants in the environment 20. Actuator unit 10 may be a nozzle for spraying chemicals. Depending on an identified species and/or an identified state of the plants, an actuator control command A may be determined to cause actuator unit 10 to spray the plants with a suitable quantity of suitable chemicals.

In even further embodiments, the at least partially autonomous robot may be given by a domestic appliance (not shown), like e.g. a washing machine, a stove, an oven, a microwave, or a dishwasher. Sensor 30, e.g. an optical sensor, may detect a state of an object which is to undergo processing by the household appliance. For example, in the case of the domestic appliance being a washing machine, sensor 30 may detect a state of the laundry inside the washing machine. Actuator control signal A may then be determined depending on a detected material of the laundry.

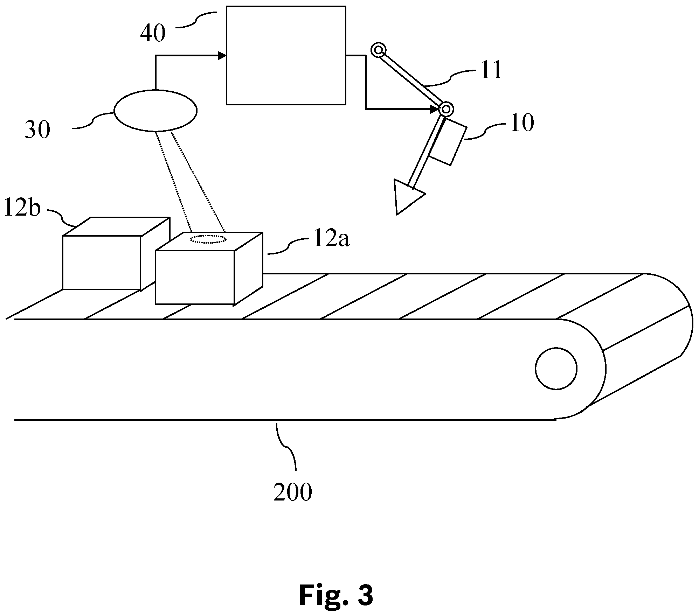

Shown in figure 3 is an embodiment in which control system 40 is used to control a manufacturing machine 11, e.g. a solder mounter, punch cutter, a cutter or a gun drill) of a manufacturing system 200, e.g. as part of a production line.

Sensor 30 may be given by an optical sensor which captures properties of e.g. a manufactured product 12. Classifier 60 may determine a state of the manufactured product 12 from these captured properties. Actuator unit 10 which controls manufacturing machine 11 may then be controlled depending on the determined state of the manufactured product 12 for a subsequent manufacturing step of manufactured product 12. Or it may be envisioned that actuator unit 10 is controlled during manufacturing of a subsequent manufactured product 12 depending on the determined state of the manufactured product 12.

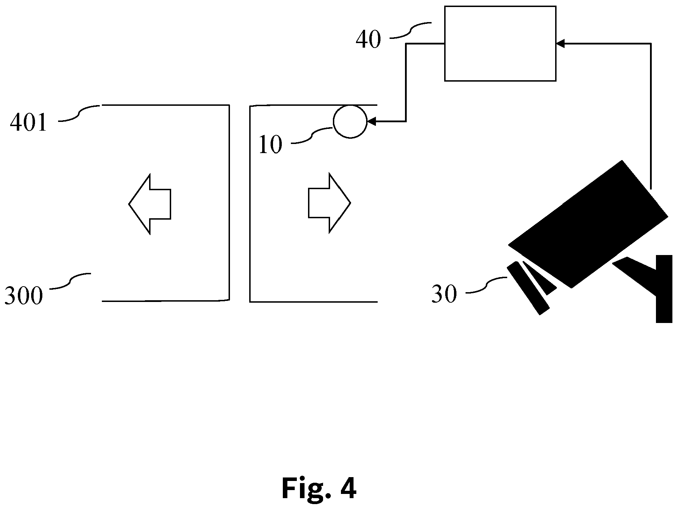

Shown in figure 4 is an embodiment in which control system controls an access control system 300. Access control system may be designed to physically control access. It may, for example, comprise a door 401. Sensor 30 is configured to detect a scene that is relevant for deciding whether access is to be granted or not. It may for example be an optical sensor for providing image or video data, for detecting a person's face. Classifier 60 may be configured to interpret this image or video data e.g. by matching identities with known people stored in a database, thereby determining an identity of the person. Actuator control signal A may then be determined depending on the interpretation of classifier 60, e.g. in accordance with the determined identity. Actuator unit 10 may be a lock which grants access or not depending on actuator control signal A. A non-physical, logical access control is also possible.

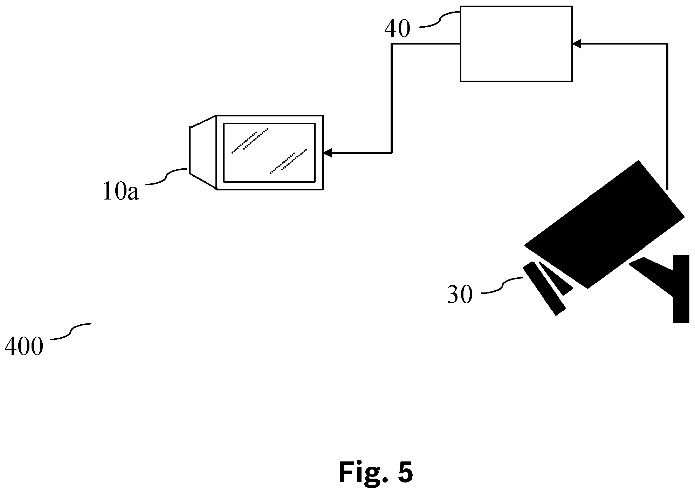

Shown in figure 5 is an embodiment in which control system 40 controls a surveillance system 400. This embodiment is largely identical to the embodiment shown in figure 5. Therefore, only the differing aspects will be described in detail. Sensor 30 is configured to detect a scene that is under surveillance. Control system does not necessarily control an actuator 10, but a display 10a. For example, the machine learning system 60 may determine a classification of a scene, e.g. whether the scene detected by optical sensor 30 is suspicious. Actuator control signal A which is transmitted to display 10a may then e.g. be configured to cause display 10a to adjust the displayed content dependent on the determined classification, e.g. to highlight an object that is deemed suspicious by machine learning system 60.

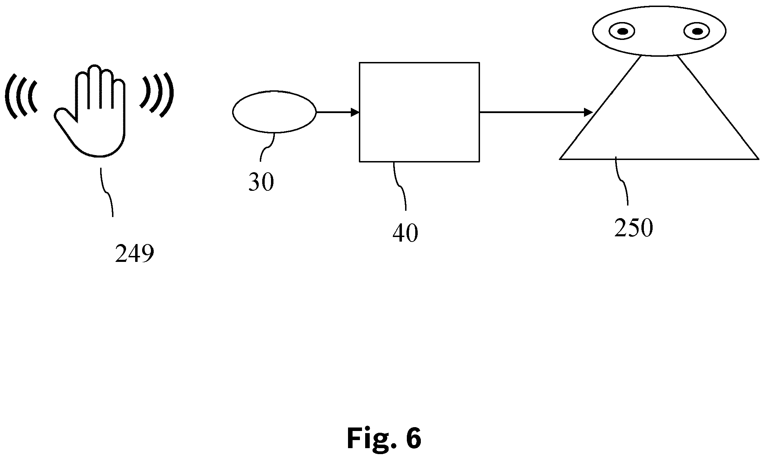

Shown in figure 6 is an embodiment in which control system 40 is used for controlling an automated personal assistant 250. Sensor 30 may be an optic sensor, e.g. for receiving video images of a gestures of user 249. Alternatively, sensor 30 may also be an audio sensor e.g. for receiving a voice command of user 249.

Control system 40 then determines actuator control commands A for controlling the automated personal assistant 250. The actuator control commands A are determined in accordance with sensor signal S of sensor 30. Sensor signal S is transmitted to the control system 40. For example, classifier 60 may be configured to e.g. carry out a gesture recognition algorithm to identify a gesture made by user 249. Control system 40 may then determine an actuator control command A for transmission to the automated personal assistant 250. It then transmits said actuator control command A to the automated personal assistant 250.

For example, actuator control command A may be determined in accordance with the identified user gesture recognized by classifier 60. It may then comprise information that causes the automated personal assistant 250 to retrieve information from a database and output this retrieved information in a form suitable for reception by user 249.

In further embodiments, it may be envisioned that instead of the automated personal assistant 250, control system 40 controls a domestic appliance (not shown) controlled in accordance with the identified user gesture. The domestic appliance may be a washing machine, a stove, an oven, a microwave or a dishwasher.

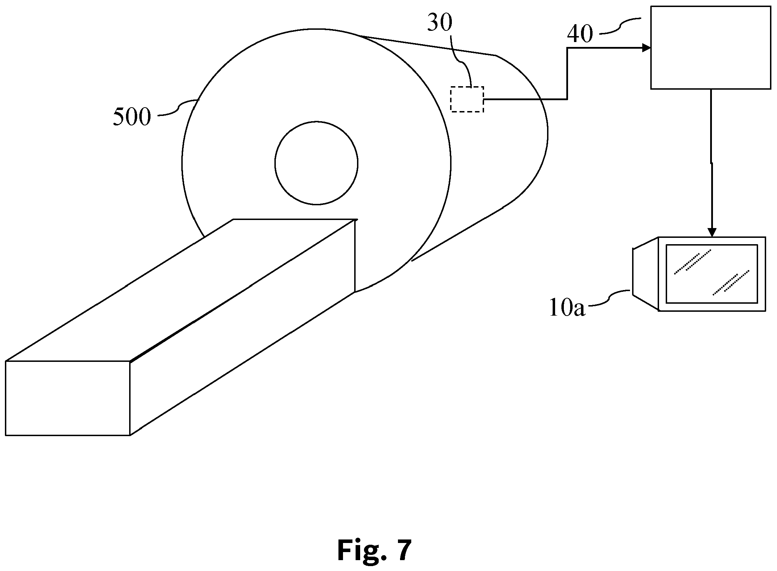

Shown in figure 7 is an embodiment of a control system 40 for controlling an imaging system 500, for example an MRI apparatus, x-ray imaging apparatus or ultrasonic imaging apparatus. Sensor 30 may, for example, be an imaging sensor. Machine learning system 60 may then determine a classification of all or part of the sensed image. Actuator control signal A may then be chosen in accordance with this classification, thereby controlling display 10a. For example, machine learning system 60 may interpret a region of the sensed image to be potentially anomalous. In this case, actuator control signal A may be determined to cause display 10a to display the imaging and highlighting the potentially anomalous region.

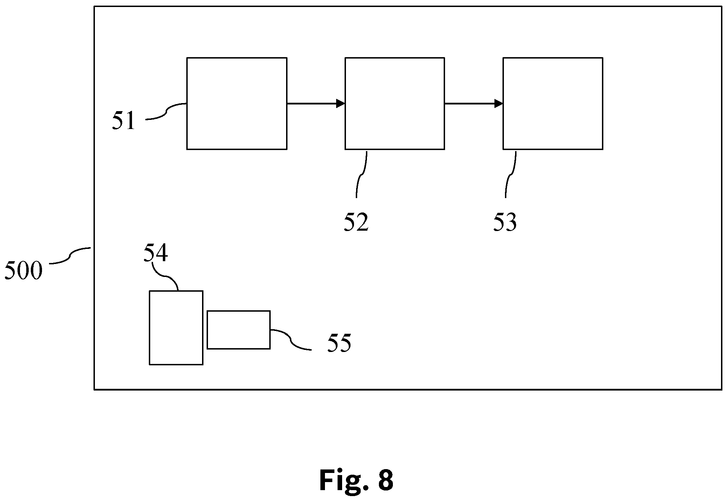

Shown in figure 8 is an embodiment of a system 500. The system 500 comprises a provider system 51, which provides input images. Input images are fed to the encoders 52, which determines latent representations from them. Said latent representations are supplied to an assessor 53, which determines the classification as discussed above in S26.

The procedures executed by the training device 500 may be implemented as a computer program stored on a machine-readable storage medium 54 and executed by a processor 55.

The term "computer" covers any device for the processing of pre-defined calculation instructions. These calculation instructions can be in the form of software, or in the form of hardware, or also in a mixed form of software and hardware.

It is further understood that the procedures cannot only be completely implemented in software as described. They can also be implemented in hardware, or in a mixed form of software and hardware.

## Claims

1. A computer-implemented method (20) of classifying a sensor signal (30) by a sensor signal encoder and a text encoder, wherein said encoders are configured to encoder their inputs into a latent representation, comprising the steps of:

   Encoding (S21) the sensor signal (30) to a first latent representation ($e^{(x)}$) by the sensor signal encoder;
   Generating (S22) a plurality of text prompts ($t_{ij}$), wherein for each class ($c_j$) several text prompts characterizing the corresponding class are generated ($t_i \leftarrow c_j$);

   Encoding (S23) each generated text prompt ($t_{ij}$) to a second latent representation ($e^t_{ij}$) by the text encoder;

   Determining (S24) a class query ($q_j$) for each class by averaging over the second representations ($e^t_{ij}$) corresponding to the same class ($c_i$);
   Computing (S25) a similarity between the first latent representation ($e^{(x)}$) and each of the class queries ($q_j$); and
   Assigning (S26) the sensor signal (30) to the class with the highest similarity; **characterized in that**

   the averaging over the second representations ($e^t_{ij}$) is carried out by a weighted average ($q_j = \frac{1}{K} \sum_{i=0}^{K} w_i e_{ij}^{(t)}$) by weighted each second representations ($e^t_{ij}$) with a weight ($w_i$).

2. The method according to claim 1, **characterized in that** the weights ($w_i$) are determined by normalizing a predetermined value ($\rho$) with a softmax-function.

3. The method according to claim 2, **characterized in that** the value (p) is determined by maximizing the similarity between the first latent representation ($e^{(x)}$) and each of the class queries ($q_j$) by gradient ascent and that the gradient is determined for the term: $log \sum_{j=0}^{K} \exp(s_j)$ and that the value ($\rho$) is updated by the gradient.

4. The method according to claim 3, **characterized in that** the gradient is determined for the term:

$$\nabla_\rho \, logsumexp(s)_i = \sum_{k=1}^{K} (\sum_{j=1}^{C} softmax(s)_j \, e_{ij}^{(xt)}) \, w_i (\delta_{ik} - w_k)$$

with $\delta_{ij}$ being the Kronecker delta function with $\delta_{ii} = 1$ and $\delta_{ij} = 0$ for $i \neq j$.

5. The method according to any of the above claims, wherein the instantiation of the prompts is generated by inserting class names ($c_j$) and/or class descriptions into predefined templates of text prompts .

6. The method according to anyone claims 1 to 4, wherein the sensor signal encoder and a text encoder are foundation models.

7. The method according to any one of the preceding claims, wherein sensor signals are digital images, in particular video, radar, LiDAR, ultrasonic, motion, thermal images, and/or the classes are technical classes, in particular classes of objects.

8. The method according to any one of the preceding claims, further comprising the step of determining an actuator control signal (A) depending on the assigned class of the sensor signal (30).

9. The method according to claims 8, in which said actuator (10) controls an at least partially autonomous robot (100) and/or a manufacturing machine (200)) and/or an access control system (300).

10. Computer program that is configured to cause a computer to carry out the method according to any one of claims 1 to 9 with all of its steps if the computer program is carried out by a processor (45, 145).

11. Machine-readable storage medium (46, 146) on which the computer program according to claim 10 is stored.

12. Apparatus (140) that is configured to carry out the method according to any one of claims 1 to 9.

**Amended claims in accordance with Rule 137(2) EPC.**

1. A computer-implemented method (20) of classifying a sensor signal (30) by a sensor signal encoder and a text encoder, wherein said encoders are configured to encoder their inputs into a latent representation, wherein the sensor signal is a digital image and classes are classes of objects, comprising the steps of:

Encoding (S21) the sensor signal (30) to a first latent representation ($e^{(x)}$) by the sensor signal encoder;
Generating (S22) a plurality of text prompts ($t_{ij}$), wherein for each class ($c_j$) several text prompts characterizing the corresponding class are generated ($t_i \leftarrow c_j$);

Encoding (S23) each generated text prompt ($t_{ij}$) to a second latent representation ( $e_{ij}^t$ ) by the text encoder;

Determining (S24) a class query ($q_j$) for each class by averaging over the second representations ( $e_{ij}^t$ ) corresponding to the same class ($c_i$);
Computing (S25) a similarity between the first latent representation ($e^{(x)}$) and each of the class queries ($q_j$); and
Assigning (S26) the sensor signal (30) to the class with the highest similarity; **characterized in that**

the averaging over the second representations ( $e_{ij}^t$ ) is carried out by a weighted average (

$q_j = \frac{1}{K}\sum_{i=0}^{K} w_i e_{ij}^{(t)}$ )by weighted each second representations ( $e_{ij}^t$ ) with a weight ($w_i$).

2. The method according to claim 1, **characterized in that** the weights ($w_i$) are determined by normalizing a predetermined value ($\rho$) with a softmaxfunction.

3. The method according to claim 2, **characterized in that** the value ($\rho$) is determined by maximizing the similarity between the first latent representation ($e^{(x)}$) and each of the class queries ($q_j$) by gradient ascent and that the gradient is determined for the term: $log\sum_{j=0}^{K}\exp(s_j)$ and that the value ($\rho$) is updated by the gradient.

4. The method according to claim 3, **characterized in that** the gradient is determined for the term:

$$\nabla_\rho \, logsumexp(s)_i = \sum_{k=1}^{K}(\sum_{j=1}^{C} softmax(s)_j \, e_{ij}^{(xt)}) w_i(\delta_{ik} - w_k)$$

with $\delta_{ij}$ being the Kronecker delta function with $\delta_{ii}$ = 1 and $\delta_{ij}$ = 0 for $i \neq j$.

5. The method according to any of the above claims, wherein the instantiation of the prompts is generated by inserting class names ($c_j$) and/or class descriptions into predefined templates of text prompts .

6. The method according to anyone claims 1 to 4, wherein the sensor signal encoder and a text encoder are foundation models.

7. The method according to any one of the preceding claims, wherein the digital image is a video, radar, LiDAR, ultrasonic, motion or thermal image.

8. The method according to any one of the preceding claims, further comprising the step of determining an actuator control signal (A) depending on the assigned class of the sensor signal (30).

9. The method according to claims 8, in which said actuator (10) controls an at least partially autonomous robot (100) and/or a manufacturing machine (200)) and/or an access control system (300).

10. Computer program that is configured to cause a computer to carry out the method according to any one of claims 1 to 9 with all of its steps if the computer program is carried out by a processor (45, 145).

11. Machine-readable storage medium (46, 146) on which the computer program according to claim 10 is stored.

12. Apparatus (140) that is configured to carry out the method according to any one of claims 1 to 9.

Fig. 1

EP 4 530 885 A1

**Fig. 2**

**Fig. 3**

**Fig. 4**

Fig. 5

**Fig. 6**

**Fig. 7**

Fig. 8

Europäisches
Patentamt

European
Patent Office

Office européen
des brevets

# EUROPEAN SEARCH REPORT

Application Number

EP 23 19 9960

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 658 954 A (UNIV EAST CHINA NORMAL) 31 January 2023 (2023-01-31) * abstract * * paragraph [0010] * * paragraph [0014] – paragraph [0015] * * paragraph [0020] * * paragraph [0024] – paragraph [0033] * * paragraph [0048] – paragraph [0052] * ----- | 1-12 | INV. G06F16/55 G06F16/75 G06N3/045 |
| A | OR PATASHNIK ET AL: "StyleCLIP: Text-Driven Manipulation of StyleGAN Imagery", ARXIV.ORG, CORNELL UNIVERSITY LIBRARY, 201 OLIN LIBRARY CORNELL UNIVERSITY ITHACA, NY 14853, 31 March 2021 (2021-03-31), XP081920254, * page 6, left-hand column, line 1 – page 6, left-hand column, line 13 * ----- | 1-12 | |
| | | | TECHNICAL FIELDS SEARCHED (IPC) G06F G06N |

The present search report has been drawn up for all claims

| Place of search | Date of completion of the search | Examiner |
|---|---|---|
| The Hague | 23 February 2024 | Boyadzhiev, Yavor |

EPO FORM 1503 03.82 (P04C01)

## ANNEX TO THE EUROPEAN SEARCH REPORT
## ON EUROPEAN PATENT APPLICATION NO.

EP 23 19 9960

23-02-2024

| Patent document cited in search report | Publication date | Patent family member(s) | Publication date |
|---|---|---|---|
| CN 115658954 A | 31-01-2023 | NONE | |

EPO FORM P0459